# EUROPEAN PATENT APPLICATION

(11) **EP 1 056 219 A2**
(43) Date of publication of application: **29.11.2000**
(21) Application number: 00110933.9
(22) Date of filing: 25.05.2000
(51) Int. Cl.: H04B 7/02, H04Q 7/36

(54) **Mobile communication system**

(30) Priority: 25.05.1999 JP 14529399
(71) Applicant: NEC CORPORATION, Tokyo (JP)
(72) Inventor: Sato, Toshifumi, Minato-ku, Tokyo (JP)
(74) Representative: VOSSIUS & PARTNER

(57) **Abstract**

With the aim of preventing increase in the number of handoffs as the number of sectors increases or the width of antenna beams decreases, the mobile communication system continues a transmission operation without changing the spreading code despite movement of a mobile station and a consequent change in the base station device of the beam having the best reception quality from the mobile station.

## Description

The present invention relates to a mobile communication system such as a car phone or portable phone system that employs DS-CDMA (Direct Spread-Code Division Multiple Access), and particularly, to a mobile communication system having a base station wireless device that is provided with an antenna that forms a plurality of beams.

Examples of mobile communication systems employing CDMA of the prior art include cdmaOne (TIA/EIA IS-95) and the third-generation mobile communication system W-CDMA (Wideband Code Division Multiple Access), which is currently being standardized but has not yet been put into practical use.

In cdmaOne (IS-95), a PN(Pseudo-random Number) code having a relatively long period of 26.6 ms (80 ms/3) multiplied by a Walsh code having a code length of 64 bit is used as a spreading code.

In a PN code, a different code (the same spreading code shifted a fixed number of times) is used for each sector antenna for each base station and even within the same base station. In addition, a Walsh code having a code length of 64 bit is used for distinguishing a plurality of channels (for CDMA, a plurality of channels share the same carrier, the channels being distinguished by the spreading code) that are transmitted from one sector antenna.

W-CDMA, on the other hand, employs a Gold code having a period of 10 ms and a Walsh code having a period of one symbol (code lengths differ according to symbol rate) as the spreading codes.

In a Gold code, a different code is used for each base station. For the plurality of sectors within the same base station, different codes or codes realized by shifting the same code a different number of times are used.

When a mobile station moves across sectors, a softer handoff is carried out between the sector and antenna. During a softer handoff, the same information is transmitted to the mobile station from a plurality of two or more sector antennas.

In the mobile station, since the spreading codes that are being used by the sector antennas differ for each sector antenna, the plurality of spreading codes are each independently de-spread, following which the information is demodulated by maximum-ratio combining.

In a mobile station, the reception quality of downstream signals in adjacent cells and sectors is constantly monitored, and a "soft handoff" or "softer handoff" is activated when it is detected that the reception quality in another cell or sector has become better than the sector that is currently receiving.

Generally, a plurality of channels share the same frequency in a CDMA system, and multiple access interference is therefore a major source of degradation in communication quality. Different methods for reducing this multiple access interference are being examined, including increasing the number of sectors by making the directivity of the sector antenna more acute or narrowing antenna directivity through the use of an array antenna.

Narrowing the beam of an antenna, however, results in an increase in the frequency with which a moving mobile station straddles sectors or antenna beams. Performing a handoff process each time a mobile station moves between sectors or antenna beams as in the prior art leads to the problem that the control process becomes extremely complex.

Further, since the frequency of soft handoffs increases, the number of antennas for transmitting information also increases, the end result being equivalent to transmitting by a wide beam from a single antenna. Increasing the number of sectors or antennas therefore obtains only a slight increase in the capacity of downstream lines or a slight improvement in quality.

In particular, in a case in which an antenna array is used to change the antenna directivity in accordance with the movement of a mobile station, it must again be determined how the spreading code was switched. At the mobile station, moreover, the transmitted beam itself changes, thus complicating detection of the optimum beam.

It is an object of the present invention to provide a mobile communication system capable of preventing increase in the number of handoffs in a case in which the number of sectors has been increased or the antenna beam width has been decreased.

In addition, it is an object of the present invention to provide a mobile communication system that can decrease the rate of simultaneous transmission of the same information from a plurality of antennas to a mobile station at the time of softer handoff, improve the efficiency of use of an downstream lines, and further, decrease the amount of processing in the mobile station.

According to the present invention, in a base station device, the beam having the highest reception quality from a mobile station is selected, information is spread using the spreading code corresponding to this beam, and the spread information is then transmitted from the base station device to the mobile station using the beam. If the mobile station should then move, bringing about a change of the beam having the best reception quality from the mobile station in the base station device, transmission is continued without altering the spreading code.

Since the spreading code for spreading information that is transmitted from the base station device to the mobile station thus does not change despite a change of the beam, the number of handoffs does not increase even when the number of sectors is increased or the width of the antenna beam is decreased.

In addition, since there is no need to wait for handoff processing, antenna beam can be quickly switched, and the rate of simultaneous transmission of the same information from a plurality of antennas to a mobile station decreases.

Finally, the amount of processing in a mobile station can be reduced because there is no need for the mobile station to distinguish between beams that are transmitted from the same base station device.

The above and other objects, features, and advantages of the present invention will become apparent from the following description based on the accompanying drawings which illustrate examples of preferred embodiments of the present invention.
Fig. 1 shows one embodiment of a mobile communication system of the present invention;
Fig. 2 is a block diagram showing an embodiment of the base station device shown in Fig. 1; and
Fig. 3 is a block diagram showing another embodiment of the base station device shown in Fig. 1.

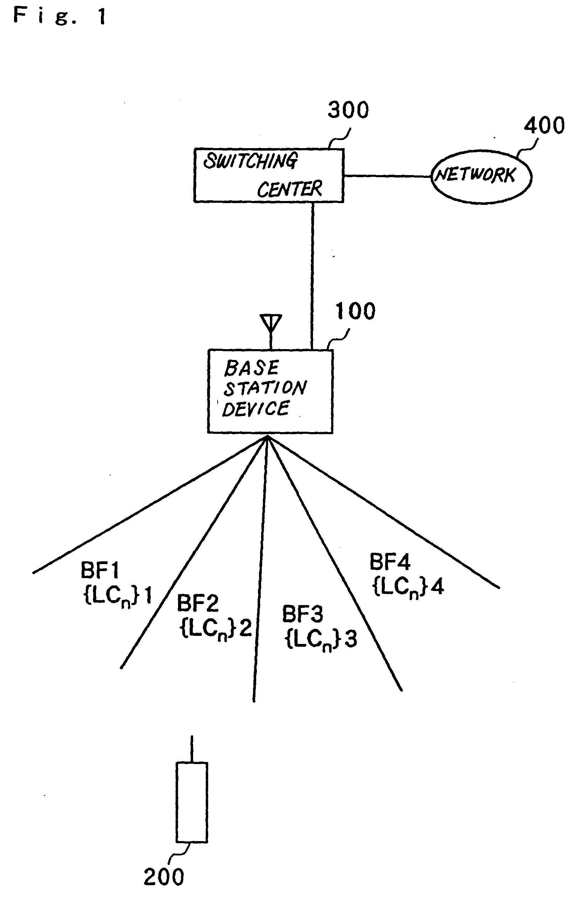

As shown in Fig. 1, this embodiment is made up of: a plurality of mobile stations 200 (only one mobile station being shown in the figure) that are capable of motion; a plurality of base station devices 100 (only one base station device being shown in the figure) that are capable of forming a plurality of beams and that are wireless-connected to mobile station 200; one or more switching centers 300 (only one switching center being shown in the figure) that is connected to base station device 100 and network 400 and that both controls the connection between base station device 100 and mobile station 200 and switching control with network 400.

Four beams BF1∼BF4 are formed at base station device 100, and one set of spreading codes {LCn}1∼{LCn}4 is assigned to each of beams BF1∼BF4.

The handoff process in the mobile communication system constituted according to the above description is next described.

In a case in which mobile station 200 initiates a call at a position covered by beam BF2, the spreading code in the downstream line that is used in the call is selected corresponding to the beam at the time of the start of the call, and a code within spreading code set {LCn}2 that is not being used is therefore selected and employed in base station device 100 as the spreading code in the downstream line.

A spreading code is constituted by multiplying a pseudo-random code having a period sufficiently longer (for example, a period in which 1 frame = 10 ms) than the length of the information symbol and a code having a short period equal to the information symbol length. In a code having a long period, a different series (for example, using a Gold code, setting a different initial value in a shift register of a Gold code generator) is set for each beam, and in a code having a short period, mutually orthogonal codes (for example, Walsh codes) are used to reduce interference between the plurality of channels within the same beam. In one beam, N (N being a natural number) long-period codes are assigned.

In a case in which mobile station 200 moves from an area that is covered by beam BF2 to an area covered by beam BF3 as shown in Fig. 1 in a mobile communication system of the prior art, the reception levels of adjacent beams were constantly monitored by mobile station 200 and a softer handoff operation was performed if the reception level of an adjacent bean was detected to be equal to the reception level of the current beam. During a softer handoff operation, the same information was simultaneously transmitted by different spreading codes using a plurality of beams (beams BF2 and BF3 in Fig. 1). After carrying out de-spreading individually for each beam in mobile station 200, maximum-ratio combining was performed.

In this embodiment, however, the spreading code corresponding to beam BF2 that was selected at the time the call was initiated continues to be used, and the spreading code used in the downstream lines is not changed despite the movement of mobile station 200 from the area covered by beam BF2 to the area covered by beam BF3.

If mobile station 200 is located at the border between the area that is covered by beam BF2 and the area that is covered by beam BF3, the information need only be transmitted by the one selected beam, the optimum beam at a particular instant being selected at base station device 100, and the same information does not need to be sent simultaneously by a plurality of beams. When synchronous detection using pilot symbols is carried out as in W-CDMA, the instantaneous ON/OFF control of transmission can in some cases prevent the use of the pilot symbols that are needed for synchronous detection, and as a consequence, pilot symbols alone must be transmitted by both beams over several slots preceding and succeeding the time of switching even though there is no need to transmit information by both beams.

Since beam selection is performed at base station device 100, there is no need to constantly monitor the reception level of adjacent beams (sectors) at mobile station 200. Further, since the same information is not transmitted by a plurality of spreading codes from one base station device, there is no need for de-spreading by the plurality of spreading codes.

The base station device used in the above-described mobile communication system is next described in detail.

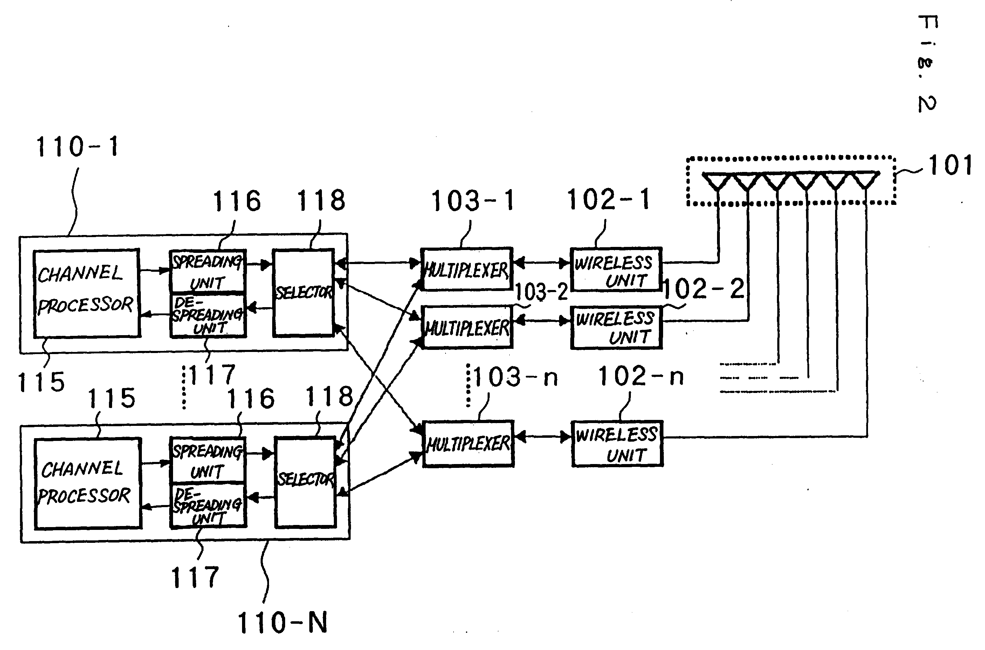

As shown in Fig. 2, the present embodiment is made up of: antenna 101 for transmitting and receiving a plurality of beams; a plurality of wireless units 102-1∼ 102-n for transmitting/receiving information by way of antenna 101 using mutually different beams; channel transmitter/receivers 110-1∼110-N for both processing by channel the information that is transmitted or received and selecting one of wireless units 102-1∼102-n based on the reception quality of the received information; and multiplexers 103-1∼103-n for multiplexing information that is transmitted or received by channel transmitter/receivers 110-1∼110-N.

Each of channel transmitter/receivers 110-1∼110-N is provided with: selector 118 for measuring the reception quality of information that has been received by way of wireless units 102-1∼102-n and multiplexers 103-1∼103-n and selecting the route having the highest reception quality; de-spreading unit 117 for carrying out de-spreading of received information; channel processor 115 for both processing information that has undergone de-spreading and processing information that is to be transmitted; and spreading unit 116 for carrying out spreading of information that has been processed by channel processor 115. Information that has undergone spreading by spreading unit 116 is transmitted by way of a route that is selected by selector 118 from among the routes made up by wireless units 102-1∼102-n and multiplexers 103-1∼103-n. Antenna 101 is constituted by a plurality of independent sector antennas having beam directivity in different directions or by an array antenna in which a plurality of elements that are arranged linearly or concentrically at half-wavelength spacing.

The operation of the base station device constituted according to the above explanation is next described.

First, at the start of a call, the reception quality over routes made up by wireless units 102-1∼102-n and multiplexers 103-1∼103-n is measured, the route having the highest reception quality is selected, and the beam for transmitting information to mobile station 200 is determined in selector 118 in channel transmitter/receiver unit 110.

Next, an unused spreading code is selected from among the set of spreading codes on the downstream line that is assigned to the determined beam.

In spreading unit 116, information processed by channel processor 115 is spread using the spreading code that was selected by selector 118.

The information that was spread by spreading unit 116 is transmitted to the multiplexer selected by selector 118 from among multiplexers 103-1∼103-n, and the plurality of channels that are transmitted by a particular beam are multiplexed in the selected multiplexer (since the information is already spread, multiplexing can be realized by simply properly arranging timing and combining).

The information that has been multiplexed by multiplexers 103-1∼103-n is converted to a radio frequency in wireless units 102-1∼102-n and transmitted by a designated beam from antenna 101.

If mobile station 200 should then move, thereby changing the route having the highest reception quality at base station device 100 among the routes made up by wireless units 102-1∼102-n and multiplexers 103-1∼103-n, the route having the highest reception quality is newly selected and information is transmitted to mobile station 200 by way of this new route, but the spreading code used for spreading in spreading unit 116 is not changed and the information is spread using the same spreading code as before the change of route.

The information receiving operation in base station device 100 is the same as in the prior art.

The spreading code is determined in advance for each mobile station 200 and has no relation to the beam on the side of base station device 100.

Upstream transmission information from mobile station 200 is spread using a predetermined spreading code and the spread information is transmitted to base station device 100.

The upstream signal that is received in a plurality of beams by way of antenna 101 is frequency-converted to a baseband signal in wireless units 102-1∼102-n and transmitted to multiplexers 103-1∼103-n.

The information that is transmitted to multiplexers 103-1∼103-n is then transmitted without change to all channel transmitter/receivers 110-1∼110-N.

Then, in selector 118 provided in channel transmitter/receivers 110-1∼110-N, the reception quality for each beam is measured and compared, and the one or plurality of beams having the highest reception quality is selected.

In receiving information on an upstream line, there is no waste as in the transmission of information on a downstream line even when receiving in a plurality of beams, and theoretically, the reception quality can be increased by maximum-ratio combining as many beams as possible.

However, since maximum-ratio combining of received signals that fall below a fixed reception quality yields very little improvement in quality compared to the increase in the amount of processing, only beams having reception quality above a fixed value are selected and used for reception.

The received information undergoes de-spreading in de-spreading unit 117 using spreading codes in upstream lines that are determined in advance for each mobile station, and the received information is then obtained through maximum-ratio combining.

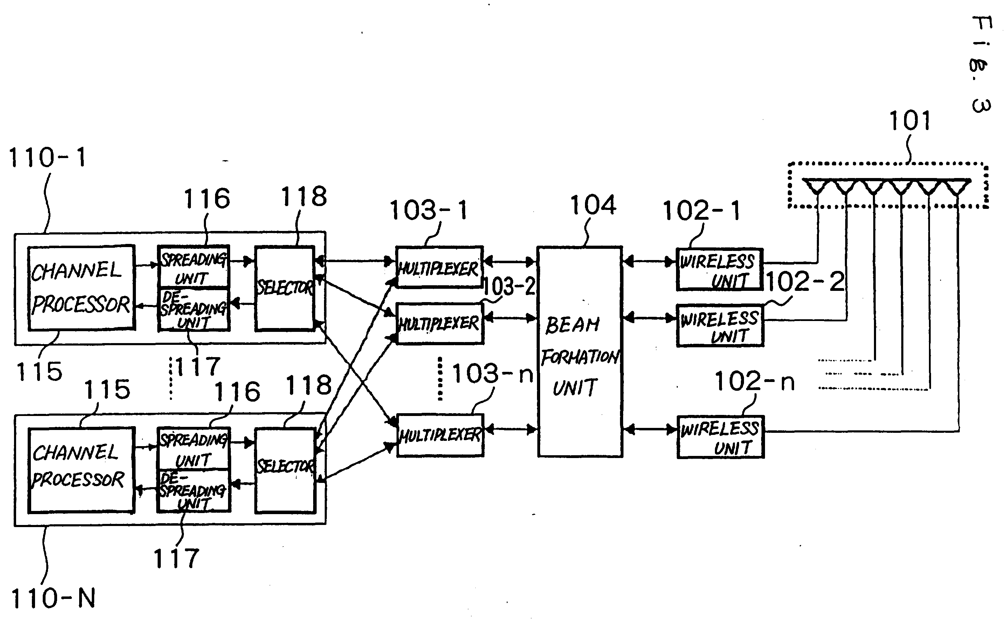

As shown in Fig. 3, another embodiment of base station device 100 shown in Fig. 1 is provided with, in addition to the components of base station device 100 shown in Fig. 2, beam formation unit 104 between multiplexers 103-1∼103-n and wireless units 102-1∼102-n for controlling the phase and amplitude of a plurality of antenna elements according to beam directivity. The construction of this embodiment is otherwise the same as the device shown in Fig. 2.

While preferred embodiments of the present invention have been described using specific terms, such description is for illustrative purposes only, and it is to be understood that changes and variations may be made without departing from the spirit or scope of the following claims.

## Claims

1. A mobile communication system comprising:
a plurality of mobile stations capable of movement; and
a plurality of base station devices that form a plurality of beams and use these beams to transmit information to and receive information from said mobile stations by radio;
wherein said base station device spreads information that is to be transmitted using a spreading code that corresponds to the beam having the highest reception quality from a mobile station among said plurality of beams, transmits the spread information to the mobile station, and subsequently does not change said spreading code even in a case in which said beam having the highest reception quality changes due to movement of the mobile station.

2. A mobile communication system according to claim 1 wherein said base station device comprises:
selection means for selecting a beam having the best reception quality from said mobile station;
a spreading means for spreading information that is to be transmitted to said mobile station using spreading codes corresponding to each of said plurality of beams; and
de-spreading means for de-spreading information that is transmitted from said mobile station;
wherein said spreading means does not change said spreading code even if said beam having the best reception quality changes due to the movement of said mobile station.

3. A system according to claim 1 or 2 wherein said base station device includes a sector antenna for forming said plurality of beams.

4. A system according to claim 1 or 2 wherein said base station device includes an array antenna for forming said plurality of beams.

5. A system according to claim 1,2,3 or 4,
wherein said spreading code is the product of a first code having a period longer than the information symbol length and a second code having the same length as said information symbol length.

6. A mobile communication system according to claim 5 wherein a plurality of said first codes are assigned to each of said plurality of beams.

7. A system according to claim 5 or 6 wherein said second code is selected so as to reduce interference between a plurality of channels in the same beam.
